**Europäisches Patentamt**

**European Patent Office**

**Office européen des brevets**

(19)

(11) Veröffentlichungsnummer : **0 094 446**
**B1**

(12)

# EUROPÄISCHE PATENTSCHRIFT

(45) Veröffentlichungstag der Patentschrift :
**12.02.86**

(21) Anmeldenummer : **82104379.1**

(22) Anmeldetag : **19.05.82**

(51) Int. Cl.⁴ : **G 01 L 19/06**

(54) **Druckaufnehmer mit einer Membran und einem Überlastanschlag.**

(43) Veröffentlichungstag der Anmeldung :
**23.11.83 Patentblatt 83/47**

(45) Bekanntmachung des Hinweises auf die Patenterteilung : **12.02.86 Patentblatt 86/07**

(84) Benannte Vertragsstaaten :
**DE GB**

(56) Entgegenhaltungen :
**DE-A- 1 473 686**
**DE-A- 2 052 515**
**DE-A- 2 534 916**
**DE-A- 2 611 494**
**US-A- 3 022 672**

(73) Patentinhaber : **HOTTINGER BALDWIN MESSTECH-
NIK GMBH**
**Im Tiefen See 45 Postfach 42 35**
**D-6100 Darmstadt (DE)**

(72) Erfinder : **Plapp, Karlheinz, Dipl.-Ing.**
**Schillerstrasse 4 .**
**D-6940 Weinheim (DE)**

(74) Vertreter : **Brand, Fritz, Dipl.-Ing.**
**Hottinger Baldwin Messtechnik GmbH Patentabteilung Im Tiefen See 45 Postfach 42 35**
**D-6100 Darmstadt (DE)**

## Beschreibung

Die Erfindung betrifft einen Druckaufnehmer mit einer auf einer Seite von dem aufzunehmenden Druck beaufschlagbaren, an einem Aufnehmergehäuse eingespannten Membran, die auf ihrer druckabgekehrten Seite mit Dehnungsmeßstreifen bestückt ist, mit einem auf der druckabgekehrten Seite der Membran angeordneten Überlastanschlag, der ein in einem Innengewinde des Aufnehmergehäuses axial geführtes Anschlagelement aufweist.

Der zulässige Überlastbereich herkömmlicher Druckaufnehmer zur Messung hydraulischer Drücke liegt im allgemeinen etwa beim doppelten Meßbereichsenddruck. Wenn ein höherer Druck auftritt, kann es zu einer plastischen Verformung oder schließlich sogar zu einem Bruch der als Meßglied dienenden Membran kommen.

In hydraulischen Anlagen treten häufig Druckspitzen auf, die ein Mehrfaches des zu messenden Betriebsdrucks betragen. Derartige Druckspitzen werden insbesondere bei Schaltvorgängen von Magnetventilen ausgelöst. Druckaufnehmer, deren Überlastbereich beim doppelten Meßbereichsenddruck liegt, der wiederum zur Erzielung einer möglichst hohen Meßgenauigkeit nach dem zu erwartenden Betriebsdruck ausgelegt ist, werden in vielen Fällen durch die auftretenden hohen Druckspitzen beschädigt. Um eine solche Beschädigung des Druckaufnehmers zu verhindern, muß der Nenndruck, d. h. der Meßbereichsenddruck, ein Mehrfaches des zu messenden Betriebsdrucks betragen. Die Genauigkeit einer Messung nimmt jedoch umso stärker ab, je kleiner das Verhältnis der Meßgröße zum Meßbereichsenddruck des Meßgerätes ist, so daß in diesen Fällen eine geringere Meßgenauigkeit in Kauf genommen werden muß.

Um eine Erhöhung des Überlastbereichs zu erreichen, ist es bekannt, den mittleren Teil der Membran bei Überlast an einem Überlastanschlag abzustützen. Die Dehnungsmeßstreifen sind jedoch nicht an der Membran, sondern an einem gesonderten Meßglied angebracht. Die Bewegung der Membran wird durch einen zentrischen Stift auf das Meßglied übertragen. Dies bedingt einen verhältnismäßig hohen Bauaufwand (US-A-3 022 672).

Bekannt ist auch, auf der druckabgekehrten Seite der Membran über ihre gesamte frei zugängliche Fläche ein sogenanntes Membranbett anzuordnen, an das sich die Membran bei Überlastung flächig anlegt (DE-A-2 052 515). Ein solcher Überlastanschlag ist jedoch nicht brauchbar, wenn die Dehnungsmeßstreifen unmittelbar auf der Membran, und zwar auf deren druckabgekehrten Seite angebracht werden. Ein Überlastanschlag in Form eines Membranbetts kann daher nur bei Dehnungsmeßstreifen-Druckaufnehmern von verhältnismäßig aufwendigem Aufbau verwendet werden, bei dem ein mit der Membran verbundener Stift die zu messende Kraft auf ein gesondertes Meßglied überträgt. Diese Bauform eignet sich jedoch nur zur Messung von kleinen Drücken. Bei größeren Drücken wird die Beanspruchung der Membran selbst zu groß, so daß der Weg für das nachgeschaltete Meßglied nicht mehr ausreicht, um ein ausreichend großes Signal zu erzeugen.

Bei einem bekannten Druckaufnehmer der eingangs genannten Gattung ist die Membran kreisringförmig ausgeführt; sie ist mit einem starren Mittelteil verbunden, das bei Überlastung am Überlastanschlag zur Anlage kommt. Da die Dehnungsmeßstreifen nur auf der kreisringförmigen Membran angebracht sind, nicht jedoch auf dem starren Mittelteil, ergeben sich durch die Berührung mit dem Überlastanschlag, der in Form eines Gewindeelementes mit an dessen Ende angeordnetem, scheibenförmigem Kopf ausgebildet ist, zwar keine Schwierigkeiten; bei sehr großen Drücken, beispielsweise über 100 bar, wie sie häufig in hydraulischen Anlagen auftreten, ist jedoch ein verhältnismäßig großer Membrandurchmesser erforderlich, um die gewünschte Meßgenauigkeit zu erreichen, außerdem birgt ein gewisses Spiel in der Gewindeführung des Überlastanschlags die Gefahr einer ungenauen Einstellung des Überlastanschlags in sich (DE-A-2 611 494).

Bei einem anderen bekannten Drucktransducer (DE-A-1 473 686), bei dem die Dehnungsmeßstreifen auch im Mittelstück einer vom Druck beaufschlagten Kreisplatte angeordnet sind, ist die Dicke der Kreisplatte so bemessen, daß bei einem zulässigen Überdruck der Spannungspegel genügend unterhalb der Proportionalitätsgrenze des gewählten Materials gehalten wird und keine Auslenkung über mehr als die Hälfte der Plattendicke erfolgt. Da mit zunehmender Plattendicke die Meßempfindlichkeit eines solchen Transducers abnimmt, schließen sich bei einer solchen Vorrichtung hohe Überlastbarkeit und hohe Meßempfindlichkeit gegenseitig aus.

Es ist Aufgabe der Erfindung, einen Druckaufnehmer der eingangs genannten Gattung so auszubilden, daß — bei Vermeidung der Nachteile des Standes der Technik — bei hoher Überlastbarkeit gleichwohl eine hohe Meßempfindlichkeit erreicht wird.

Diese Aufgabe wird erfindungsgemäß dadurch gelöst, daß die Membran eine auch in ihrem Mittelteil mit Dehnungsmeßstreifen bestückte Kreisplatte ist, daß das Anschlagelement eine Anschlagschraube ist, die durch eine sich am Aufnehmergehäuse abstützende Druckfeder im Innengewinde spielfrei geführt wird und daß die Anschlagschraube mit ihrer dem Mittelteil der Membran zugekehrten Stirnfläche mit einer elektrischen Isolierschicht versehen ist.

Die Anschlagschraube kann so eingestellt werden, daß die Membran bei einem vorgegebenen Druck oberhalb des Meßbereichenddrucks die Stirnfläche der Anschlagschraube berührt.

Übersteigt der Druck diesen vorgegebenen Wert, so wird die Membran an der Stirnfläche der Anschlagschraube abgestützt. Je größer der Druck wird, umso größer wird die Berührungsfläche zwischen der Membran und der Stirnfläche der Anschlagschraube, so daß sich die Überlast-Schutzwirkung mit zunehmendem Druck erhöht. Dadurch erhöht sich die Beanspruchung der Membran mit zunehmendem Druck nur geringfügig.

Die an der Stirnfläche der Anschlagschraube angeordnete, elektrisch isolierende Schicht verhindert eine Beeinträchtigung oder Beschädigung der im Mittelteil der Membran angeordneten Dehnungsmeßstreifen durch eine metallische Berührung mit der Anschlagschraube. Die verhältnismäßig dünne Isolierschicht beeinträchtigt die Steifigkeit und Tragfähigkeit des Überlastanschlags nicht ; sie verhindert jedoch eine Berührung zwischen den Dehnungsmeßstreifen und der metallischen Oberfläche der Anschlagschraube.

Die Flanken des Gewindes der Anschlagschraube werden durch die Druckfeder gegen diejenige Flankenseite des Innengewindes gedrückt, von der auch die Betriebsbeanspruchung bei Überlast aufgenommen werden muß. Dadurch wird ein Gewindespiel ausgeschlossen, durch das die Einstellgenauigkeit des Überlastanschlages beeinträchtigt werden könnte.

In Weiterbildung des Erfindungsgedankens ist vorgesehen, daß das die Anschlagschraube aufnehmende Innengewinde in einer Traverse des Aufnehmergehäuses angeordnet ist. Mit sehr einfachen konstruktiven Mitteln wird hierdurch eine sehr tragfähige Abstützung der Anschlagschraube im Aufnehmergehäuse erreicht.

Eine Durchmesservergrößerung gegenüber Ausführungsformen mit starrem Membranmittelteil wird vermieden.

Die Erfindung wird nachfolgend an einem Ausführungsbeispiel näher erläutert, das in der Zeichnung dargestellt ist. Es zeigt :

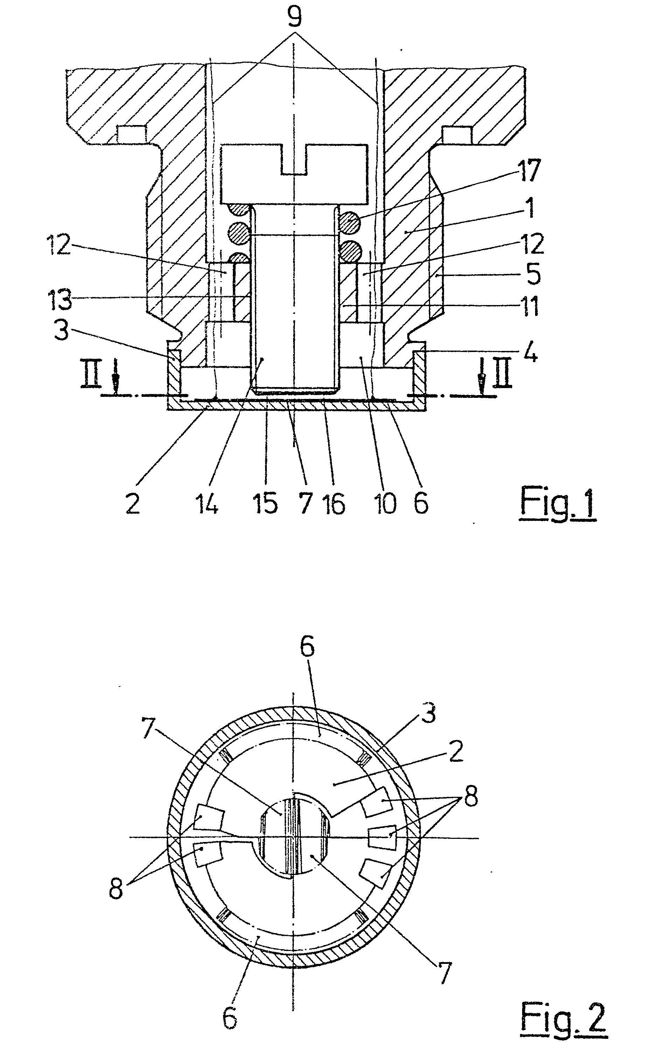

Figur 1 einen Längsschnitt durch einen Druckaufnehmer mit einstellbarem Überlastanschlag und

Figur 2 einen Schnitt längs der Linie II-II in Fig. 1.

An der Stirnfläche eines angenähert hohlzylindrischen Aufnehmergehäuses 1 ist eine als Meßglied wirkende Membran 2 angebracht, die die Form einer Kreisplatte hat. Ein von den Rändern der Membran 2 nach oben ragender, umlaufender Rand 3 ist am Aufnehmergehäuse 1 mittels einer Löt- oder Schweißverbindung 4 angebracht.

Das Aufnehmergehäuse 1 trägt an seiner Außenseite ein Außengewinde 5, mit dem es in einer hierzu bestimmten (nicht dargestellten) Gewindebohrung einer Hydraulikanlage od. dgl. eingeschraubt werden kann. Der zu messende Druck steht dann auf der Außenseite der Membran 2 an.

An der druckabgekehrten Innenseite der Membran 2 ist eine aus Dehnungsmeßstreifen 6, 7 bestehende Dehnungsmeßstreifen-Rosette angebracht, von deren Anschlußkontakten 8 elektrische Leitungen 9 zur (nicht dargestellten) Auswerteschaltung des Meßgeräts führen. Das Gerät dient zur Messung hydraulischer Drücke.

In einer Gehäusebohrung 10 des Aufnehmergehäuses 1 ist eine damit einstückig ausgeführte Traverse 11 angeordnet, die Bohrungen 12 für die Leitungen 9 aufweist. Zentrisch in der Traverse 11 ist eine Bohrung mit Innengewinde 13 angeordnet, das eine Anschlagschraube 14 aufnimmt. Die Stirnfläche 15 der Anschlagschraube 14 ist mit einer elektrischen Isolierschicht 16 versehen und liegt im Ruhezustand in einem vorgegebenen Abstand auf der druckabgekehrten Seite der Membran 2. Dieser Abstand ist durch Verdrehen der Anschlagschraube 14 einstellbar.

Eine zwischen der Traverse 11 und dem Kopf der Anschlagschraube 14 angeordnete Druckfeder 17 führt die Anschlagschraube 14 spielfrei im Innengewinde 13.

Wenn die Membran 2 an ihrer Außenseite mit dem zu messenden Druck beaufschlagt wird, wölbt sich die Membran 2 nach innen. Die dabei auftretende Längenänderung der Dehnungsmeßstreifen 6, 7 wird in ein elektrisches Meßsignal umgesetzt. Überschreitet der auf der Membranaußenseite anstehende Druck einen vorgegebenen Wert, der oberhalb des Nenndrucks des Druckaufnehmers liegt, so stützt sich die Membran 2 an der Stirnfläche 15 der Anschlagschraube 14 ab. Dabei kommt es zu einer Berührung zwischen den Dehnungsmeßstreifen 7 und der Isolierschicht 16, wodurch eine Beschädigung oder sonstige Beeinträchtigung der Dehnungsmeßstreifen 7 verhindert wird. Der Druck, bei dem sich die Membran 2 an der Anschlagschraube 14 abstützt, kann durch Verdrehen der Anschlagschraube 14 genau eingestellt werden.

Die Oberflächenrauhigkeit der Stirnseite 15 der Anschlagschraube 14 wird möglichst klein gewählt, um auch bei sehr dünner Isolierschicht 16 eine ausreichende Funktionssicherheit des Überlastanschlags zu erreichen.

**Patentansprüche**

1. Druckaufnehmer mit einer auf einer Seite von dem aufzunehmenden Druck beaufschlagbaren, an einem Aufnehmergehäuse (1) eingespannten Membran (2), die auf ihrer druckabgekehrten Seite mit Dehnungsmeßstreifen (6, 7) bestückt ist, mit einem auf der druckabgekehrten Seite der Membran (2) angeordneten Überlastanschlag, der ein in einem Innengewinde (13) des Aufnehmergehäuses (1) axial geführtes Anschlagelement (14) aufweist, dadurch gekennzeichnet, daß die Membran (2) eine auch in ihrem Mittelteil mit Dehnungsmeßstreifen (7) bestückte Kreisplatte ist, daß das Anschlagelement (14) eine Anschlagschraube ist, die durch eine sich am Aufnehmergehäuse (1) abstützende Druckfeder (17) im Innengewinde (13) spielfrei geführt wird und daß die Anschlagschraube mit ihrer dem Mittelteil der Membran (2) zugekehrten Stirnfläche (15) mit einer elektrischen Isolierschicht (16) versehen ist.

2. Druckaufnehmer nach Anspruch 1, dadurch gekennzeichnet, daß das die Anschlagschraube (14) aufnehmende Innengewinde (13) in einer Traverse (11) des Aufnehmergehäuses (1) angeordnet ist.

**Claims**

1. Pressure detector with a membrane (2) which is acted upon on one side by the pressure to be detected, is stretched on a detector housing (1), and is provided with resistance strain gauges (6, 7) on its side remote from the pressure, with an overload stop arranged on the side of the membrane (2) remote from the pressure, the stop comprising a stop element (14) axially guided in an internal thread (13) of the detector housing (1), characterised in that the membrane (2) is a circular sheet also provided with resistance strain gauges (7) at its central portion, that the stop element (14) is a stop screw which is guided without play in the internal thread (13) by a compression spring (17) supported by the detector housing (1), and that the stop screw with its front surface (15) facing the central portion of the membrane (2) is provided with an electrically insulating layer (16).

2. Pressure detector according to claim 1, characterised in that the internal thread (13) receiving the stop screw (14) is arranged in a cross arm (11) of the detector housing (1).

**Revendications**

1. Détecteur de pression comportant une membrane (2), tendue sur un boîtier 1, soumise sur une face à la pression à détecter, et qui est équipée sur la face opposée à la pression de jauges extensométriques (6, 7), avec un arrêt de surcharge, disposé du côté de la membrane (2) opposé à la pression, qui présente un élément de butée (14) guidé dans le taraudage (13) du boîtier (1) caractérisé par le fait que la membrane (2) est une plaque circulaire pourvue également en son milieu de jauges extensométriques (7), que l'élément de butée (14) est une vis qui est guidée sans jeu dans le taraudage (13) du boîtier (1) par un ressort de pression (17) s'appuyant sur le boîtier et que la vis de butée est pourvue d'une couche électriquement isolante (16) sur sa face frontale (15) tournée vers le milieu de la membrane (2).

2. Détecteur de pression selon la revendication 1 caractérisé par le fait que le taraudage (13) recevant la vis de butée (14) est disposé dans une traverse (11) du boîtier (1).

0 094 446

Fig.1

Fig.2

1